# EUROPÄISCHE PATENTSCHRIFT

(11) **EP 1 308 846 B1**
(45) Veröffentlichungstag und Bekanntmachung des Hinweises auf die Patenterteilung: **01.10.2008**
(21) Anmeldenummer: 01126002.3
(22) Anmeldetag: 31.10.2001
(51) Int. Cl.: G06F 13/40, G06F 13/28

(54) **Datenübertragungseinrichtung**
Data Transfer Device
Dispositif de transfert de données

(43) Veröffentlichungstag der Anmeldung: 07.05.2003
(73) Patentinhaber: Infineon Technologies AG, 81669 München (DE)
(72) Erfinder: Rohm, Peter, 85276 Pfaffenhofen a.d. lim (DE); Fenzl, Gunther, 85635 Höhenkirchen (DE); Barrenscheen, Jens, Dr., 81669 München (DE)
(74) Vertreter: Jannig, Peter

(56) Entgegenhaltungen:
- EP-A- 0 388 300
- WO-A-01/01257
- GB-A- 2 213 685
- US-A- 5 287 457
- US-A- 5 333 294
- US-A- 5 561 820
- US-A- 5 574 869
- US-A- 5 619 726

## Beschreibung

Die vorliegende Erfindung betrifft eine Vorrichtung gemäß dem Oberbegriff des Patentanspruchs 1.

Bekannte Datenübertragungseinrichtungen sind beispielsweise DMA-Controller oder Bus Bridges, die beispielsweise in programmgesteuerten Einheiten wie Mikroprozessoren, Mikrocontrollern, Signalprozessoren etc. enthalten sind.

DMA-Controller und Bus Bridges sind an einem Datenbus angeschlossene Einrichtungen (DMA-Controller) bzw. zwischen zwei Datenbussen vorgesehene Einrichtungen (Bus Bridges), die einen besonders effizienten, genauer gesagt einen ohne größere Belastung der CPU der programmgesteuerten Einheit erfolgenden Transfer von Daten zwischen weiteren Einrichtungen, die am Bus bzw. an den Bussen angeschlossen sind.

Der Aufbau, die Funktion, und die Vorteile des Einsatzes von DMA-Controllern und Bus Bridges sind bekannt, so daß auf die Beschreibung weiterer Einzelheiten verzichtet werden kann.

Aufgrund der Tatsache, daß in modernen programmgesteuerten Einheiten immer größere Datenmengen in immer kürzerer Zeit über die die Komponenten der programmgesteuerten Einheit miteinander verbindenden Datenbusse übertragen werden müssen, bereitet es auch dann, wenn DMA-Controller und Bus Bridges vorgesehen werden, zunehmend größere Schwierigkeiten, die zu transferierenden Daten mit geringem Aufwand schnell, einfach, und effizient zu übertragen.

Um den Transfer größere Datenmengen effizient, insbesondere mit möglichst geringer Belastung der CPU durchführen zu können, kann vorgesehen werden,
- mehrere unabhängig voneinander betreibbare Bussysteme vorzusehen, um die durchzuführenden Datentransfers auf mehrere Bussysteme verteilen zu können, und/oder
- alle am Bus angeschlossenen Einrichtungen, die größere Datenmengen auszugeben haben können oder anfordern können, als Bus-Master auszubilden, so daß diese direkt, d.h. ohne Umweg über die CPU oder einen DMA-Controller mit der Datenquelle oder dem Datenziel in Verbindung treten können,
- die am Bus angeschlossenen Einrichtungen mit Zwischenspeichern (beispielsweise FIFOs) auszustatten, damit jeweils größere Datenmengen von und/oder zu diesen transferiert werden können

Diese Maßnahmen erfordern jedoch einen hohen Aufwand, und führen ferner dazu, daß der betreffende Baustein groß und teuer wird.

Eine Datenübertragungseinrichtung, die sämtliche Merkmale des Oberbegriffs des Patentanspruchs 1 aufweist, ist aus der US 5 574 869 A bekannt. Diesem Dokument sind jedoch keine Anregungen für eine zufriedenstellende Lösung der vorstehend angesprochenen Probleme entnehmbar.

Der vorliegenden Erfindung liegt daher die Aufgabe zugrunde, die Datenübertragungseinrichtung gemäß dem Oberbegriff des Patentanspruchs 1 derart weiterzubilden, daß es mit geringem Aufwand möglich ist, große Datenmengen schnell und effizient zu übertragen.

Diese Aufgabe wird erfindungsgemäß durch die in Patentanspruch 1 beanspruchten Datenübertragungseinrichtung gelöst.

Vorteilhafte Weiterbildungen der Erfindung sind den Unteransprüchen, der folgenden Beschreibung, und den Figuren entnehmbar.

Die Erfindung wird nachfolgend anhand von Ausführungsbeispielen unter Bezugnahme auf die Figuren näher erläutert. Es zeigen
- Figur 1: eine erste Einsatzmöglichkeit der im folgenden beschriebenen Datenübertragungseinrichtung,
- Figuren 2A und 2B: zwei weitere Einsatzmöglichkeiten der im folgenden beschriebenen Datenübertragungseinrichtung,
- Figur 3: eine weitere Einsatzmöglichkeit der im folgenden beschriebenen Datenübertragungseinrichtung, und
- Figur 4: den Aufbau der im folgenden beschriebenen Datenübertragungseinrichtung.

Die im folgenden beschriebene Datenübertragungseinrichtung ist im betrachteten Beispiel Bestandteil eines Mikrocontrollers. Sie könnte aber auch Bestandteil einer anderen programmgesteuerten Einheit wie beispielsweise eines Mikroprozessors oder eines Signalprozessors sein, und könnte auch Bestandteil einer beliebigen anderen Einrichtung sein oder eine eigenständige Einheit ohne weitere Bestandteile sein.

Der Mikrocontroller, dessen Bestandteil die Datenübertragungseinrichtung ist, enthält im betrachteten Beispiel neben der Datenübertragungseinrichtung eine oder mehrere CPUs, einen oder mehrere Speicher, und eine oder mehrere Peripherieeinheiten wie beispielsweise einen A/D-Wandler, einen D/A-Wandler, einen Timer, einen CAN-Controller, einen USB-Controller, ein OCDS-Modul etc. Der Vollständigkeit halber sei angemerkt, daß der Mikrocontroller auch mehr, weniger oder beliebige andere Komponenten enthalten kann.

Die Komponenten des Mikrocontrollers sind über einen oder mehrere Busse miteinander verbunden.

Die Datenübertragungseinrichtung kann, wie nachfolgend näher beschrieben wird, an einem oder mehreren Bussen angeschlossen werden, und als DMA-Controller, oder als Bus Bridge, oder gleichzeitig oder abwechselnd als DMA-Controller und als Bus Bridge verwendet werden, und darüber hinaus sogar noch weitere Aufgaben übernehmen, auf welche später noch genauer eingegangen wird.

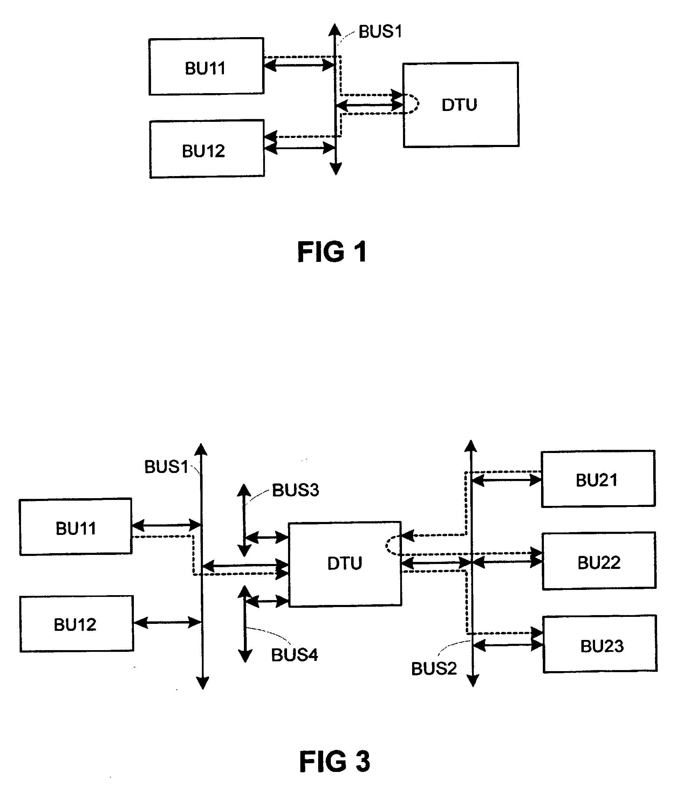

In Figur 1 ist eine Anordnung gezeigt, in welcher die Datenübertragungseinrichtung "nur" an einen einzigen Bus angeschlossen ist. Dabei sind die Datenübertragungseinrichtung mit dem Bezugszeichen DTU, bezeichnet, und der Bus mit dem Bezugszeichen BUS1. Am Bus BUS1 sind außer der Datenübertragungseinrichtung DTU mit den Bezugszeichen BU11 und BU12 bezeichnete weitere Komponenten des Mikrocontrollers, und eventuell in der Figur 1 nicht gezeigte weitere Komponenten angeschlossen.

In der in der Figur 1 gezeigten Anordnung, in welcher die Datenübertragungseinrichtung DTU "nur" mit einem Bus verbunden ist, kann die Datenübertragungseinrichtung DTU "nur" als DMA-Controller verwendet werden. Dabei kann sie auf eine entsprechende Anforderung durch eine der Komponenten des Mikrocontrollers selbständig, d.h. insbesondere ohne Mitwirkung der CPU, Daten von einer der am Bus BUS1 angeschlossenen Einrichtungen an eine andere der am Bus BUS1 angeschlossenen Einrichtungen übertragen. Bei dem in der Figur 1 veranschaulichten Beispiel werden durch die Datenübertragungseinrichtung DTU gerade Daten von der Einrichtung BU11 zur Einrichtung BU12 transferiert; dies ist durch einen gestrichelten Pfeil dargestellt.

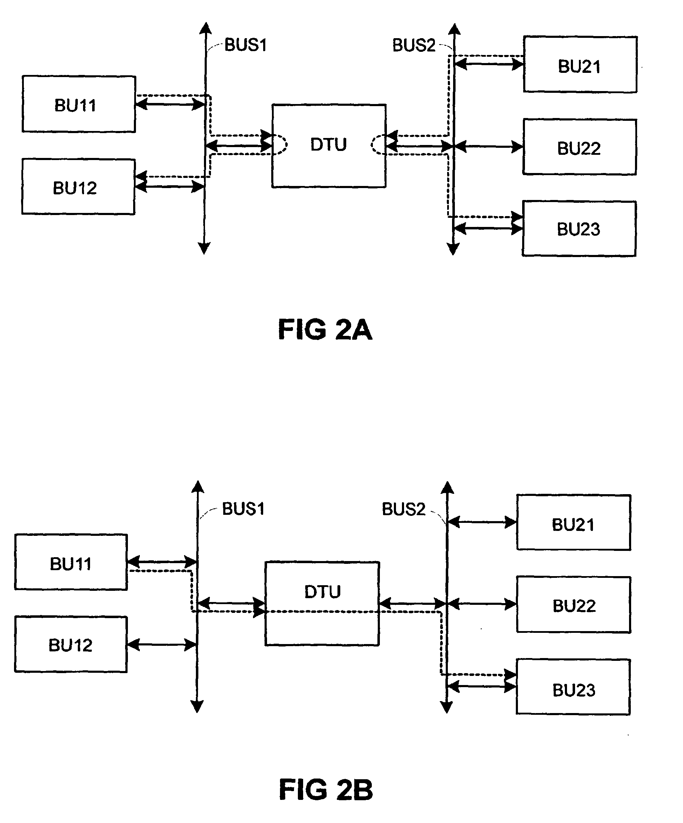

In den Figuren 2A und 2B ist eine Anordnung gezeigt, in welcher die Datenübertragungseinrichtung DTU an den Bus BUS1 und zusätzlich an einen zweiten Bus BUS2 angeschlossen ist, wobei am zweiten Bus BUS2 außer der Datenübertragungseinrichtung DTU mit den Bezugszeichen BU21, BU22, und BU23 bezeichnete weitere Komponenten des Mikrocontrollers, und eventuell in der Figur 2 nicht gezeigte weitere Komponenten angeschlossen sind.

In der in den Figuren 2A und 2B gezeigten Anordnung, in welcher die Datenübertragungseinrichtung DTU mit zwei Bussen verbunden ist, kann die Datenübertragungseinrichtung DTU entweder als DMA-Controller, oder als Bus Bridge, oder abwechselnd als DMA-Controller und als Bus Bridge verwendet werden.

Bei der Verwendung der Datenübertragungseinrichtung DTU als DMA-Controller kann sie auf eine entsprechende Anforderung durch eine der Komponenten des Mikrocontrollers selbständig, d.h. insbesondere ohne Mitwirkung der CPU, Daten von einer der am Bus BUS1 angeschlossenen Einrichtungen an eine andere der am Bus BUS1 angeschlossenen Einrichtungen oder an eine am Bus BUS2 angeschlossene Einrichtung übertragen, oder Daten von einer der am Bus BUS2 angeschlossenen Einrichtungen an eine andere der am Bus BUS2 angeschlossenen Einrichtungen oder eine am Bus BUS1 angeschlossene Einrichtung übertragen. Ein Beispiel hierfür ist in der Figur 2A veranschaulicht: dort werden durch die Datenübertragungseinrichtung DTU gerade Daten von der Einrichtung BU11 zur Einrichtung BU12, und von der Einrichtung BU21 zur Einrichtung BU23 transferiert; dies ist in der Figur 2A durch gestrichelte Pfeile veranschaulicht. Die Datenübertragungseinrichtung DTU ist vorzugsweise so ausgebildet, daß über verschiedene Busse erfolgende Datentransfers, also beispielsweise DMA-Transfers zwischen den Einrichtungen BU11 und BU12 sowie DMA-Transfers zwischen den Einrichtungen BU21 und BU23 gleichzeitig erfolgen können.

Bei der Verwendung der Datenübertragungseinrichtung DTU als Bus Bridge kann sie Daten, die eine an einem der Busse angeschlossenen Einrichtung auf den einen Bus ausgibt, um sie zu einer am anderen Bus angeschlossenen Einrichtung zu übertragen, vom einen Bus auf den anderen Bus transferieren. Ein Beispiel hierfür ist in der Figur 2B veranschaulicht: dort werden durch die Datenübertragungseinrichtung DTU gerade Daten, die die Einrichtung BU11 zur Einrichtung BU23 übertragen möchte, vom ersten Bus BUS1 auf den zweiten Bus BUS2 weitergeleitet; dies ist in der Figur 2B durch einen gestrichelten Pfeil veranschaulicht.

Es dürfte einleuchten, daß die Datenübertragungseinrichtung auch an mehr als zwei Busse angeschlossen werden kann. In Figur 3 ist eine Anordnung gezeigt, in welcher die Datenübertragungseinrichtung an vier Busse BUS1 bis BUS4 angeschlossen ist.

In der in der Figur 3 gezeigten Anordnung, in welcher die Datenübertragungseinrichtung DTU mit vier Bussen verbunden ist, kann die Datenübertragungseinrichtung DTU entweder als DMA-Controller, oder als Bus Bridge, oder abwechselnd als DMA-Controller und als Bus Bridge, oder gleichzeitig als DMA-Controller und als Bus Bridge verwendet werden.

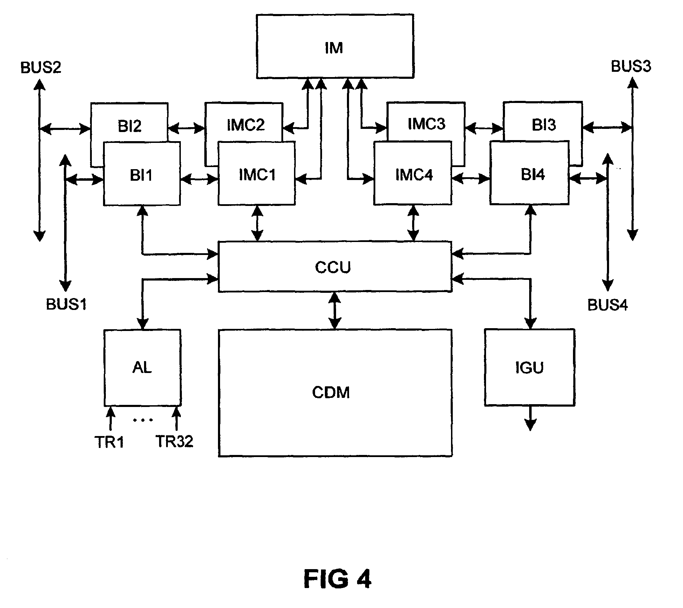

Im folgenden wird der Aufbau der in der Figur 4 gezeigten, d.h. einer zum Anschluß an vier Busse ausgelegten Datenübertragungseinrichtung DTU beschrieben. Der prinzipielle Aufbau ist in Figur 4 gezeigt.

Gemäß Figur 4 enthält die Datenübertragungseinrichtung DTU eine zentrale Steuereinheit CCU, ein zum Anschluß der Datenübertragungseinrichtung DTU an den ersten Bus BUS1 dienendes Bus-Interface BI1, ein zum Anschluß der Datenübertragungseinrichtung DTU an den zweiten Bus BUS2 dienendes Bus-Interface BI2, ein zum Anschluß der Datenübertragungseinrichtung DTU an den dritten Bus BUS3 dienendes Bus-Interface BI3, ein zum Anschluß der Datenübertragungseinrichtung DTU an den vierten Bus BUS4 dienendes Bus-Interface BI4, einen Zwischenspeicher IM, eine dem ersten Bus-Interface BI1 zugeordnete Zwischenspeicher-Steuereinrichtung IMC1, eine dem zweiten Bus-Interface BI2 zugeordnete Zwischenspeicher-Steuereinrichtung IMC2, eine dem dritten Bus-Interface BI3 zugeordnete Zwischen-Speicher-Steuereinrichtung IMC3, eine dem vierten Bus-Interface BI4 zugeordnete Zwischenspeicher-Steuereinrichtung IMC4, einen Konfigurationsdatenspeicher CDM, eine Arbitrierungslogik AL, und eine Interrupt-Erzeugungseinrichtung IGU.

Obgleich dies in der Figur 4 nicht gezeigt ist, sind an den Bussen BUS1 bis BUS4 jeweils eine Vielzahl von (in den Figuren 1 bis 3 mit dem Bezugszeichen BU bezeichneten) Einrichtungen angeschlossen.

Der Datenübertragungseinrichtung DTU obliegt es, von einer ersten Einrichtung erhaltene, für eine zweite Einrichtung bestimmte Daten an die zweite Einrichtung weiterzuleiten.

Die Daten, die die Datenübertragungseinrichtung DTU zwischen an den Bussen angeschlossenen Einrichtungen zu übertragen hat, werden über eines der Bus-Interfaces BIx eingelesen, und sofort oder später (nach einer Zwischenspeicherung im Zwischenspeicher IM) über das selbe oder ein anderes Bus-Interface BIx ausgegeben. Das Einschreiben von Daten in den Zwischenspeicher IM und das Auslesen von im Zwischenspeicher IM gespeicherten Daten erfolgt unter der Steuerung der Zwischenspeicher-Steuereinrichtung IMCx, welche dem Bus-Interface BIx zugeordnet ist, das die zu transferierenden Daten vom zugeordneten Bus empfängt, und der Zwischenspeicher-Steuereinrichtung IMCy, welche dem Bus-Interface BIy zugeordnet ist, das die zu transferierenden Daten auf den zugeordneten Bus ausgibt.

Jedes Bus-Interface BI1 bis BI4 und/oder die diesen zugeordneten Zwischenspeicher-Steuereinrichtungen IMC1 bis IMC4 sind darüber hinaus in der Lage, weitere Funktionen zu übernehmen. Diese Funktionen bestehen im betrachteten Beispiel darin,
- daß Daten, die von einer ersten Einrichtung erhalten wurden und für eine zweite Einrichtung bestimmt sind, nicht oder nur zum Teil an die zweite Einrichtung weitergeleitet werden, und/oder
- daß Daten, die von einer ersten Einrichtung erhalten wurden und für eine zweite Einrichtung bestimmt sind, vor deren Weiterleitung an die zweite Einrichtung verändert werden, und/oder
- daß anstelle von Daten, die von einer ersten Einrichtung erhalten wurden und für eine zweite Einrichtung bestimmt sind, andere Daten an die zweite Einrichtung ausgegeben werden, und/oder
- daß Daten, die von einer ersten Einrichtung erhalten wurden und für eine zweite Einrichtung bestimmt sind, statt an die zweite Einrichtung oder zusätzlich an eine andere Einrichtung weitergeleitet werden, und/oder
- daß das Entgegennehmen und/oder das Holen von Daten von einer ersten Einrichtung und/oder das Weiterleiten der Daten an eine zweite Einrichtung beendet wird, wenn in den erhaltenen und/oder den weiterzuleitenden Daten bestimmte Daten oder eine bestimmte Datenfolge enthalten sind, und/oder
- daß die Größe der Einheiten, in welchen die Datenübertragungseinrichtung die Daten an die zweite Einrichtung weiterleitet, anders festgelegt wird als die Größe der Einheiten, in welchen die Datenübertragungseinrichtung Daten von der ersten Einrichtung entgegennimmt oder holt.

Die Bus-Interfaces BI1 bis BI4 und/oder die Zwischenspeicher-Steuereinrichtungen IMC1 bis IMC4 sind durch die zentrale Steuereinheit CCU abhängig vom jeweils auszuführenden Datentransfer konfigurierbar. Die Konfigurationsdaten, unter Verwendung welcher die Konfiguration erfolgt, sind
- im Konfigurationsdatenspeicher CDM gespeichert, und werden bei Bedarf von der zentralen Steuereinheit CCU aus dieser ausgelesen und/oder
- werden der Datenübertragungseinrichtung DTU von außerhalb (beispielsweise über einen der Busse) zugeführt, und/oder
- werden von der zentralen Steuereinheit CCU selbst erzeugt.

Im Konfigurationsdatenspeicher CDM sind mehrere Konfigurationsdatensätze zur Konfigurierung der Bus-Interfaces BI1 bis BI4 und/oder der Zwischenspeicher-Steuereinrichtungen IMC1 bis IMC4 gespeichert. Der zur Konfigurierung zu verwendende Konfigurationsdatensatz wird abhängig vom jeweils durchzuführenden Datentransfer ausgewählt. Die Auswahl des zu verwendenden Konfigurationsdatensatzes und die Konfigurierung der zu konfigurierenden Datenübertragungseinrichtungs-Komponenten erfolgt durch die zentrale Steuereinheit CCU. Diese liest den zu verwendenden Konfigurationsdatensatz aus dem Konfigurationsdatenspeicher CDM aus und konfiguriert die zu konfigurierenden Datenübertragungseinrichtungs-Komponenten unter Verwendung dieser Daten.

Jeder Konfigurationsdatensatz enthält die Konfigurationsdaten, unter Verwendung welcher die Bus-Interfaces BI1 bis BI4 und die Zwischenspeicher-Steuereinrichtungen IMC1 bis IMC4 konfiguriert werden müssen, damit der jeweils durchzuführende Datentransfer ordnungsgemäß durchgeführt wird. Im betrachteten Beispiel wird durch jeden Konfigurationsdatensatz festgelegt,
- ob die Datenübertragungseinrichtung die Ausgabe der zu transferierenden Daten anfordern muß, und gegebenenfalls
   - welches die (erste) Einrichtung ist, von welcher die Ausgabe der zu transferierenden Daten anzufordern ist,
   - die Ausgabe welcher Daten anzufordern ist, und
   - welche Datenmenge zu transferieren ist,
- welches die (zweite) Einrichtung ist, an die die zu transferierenden Daten weiterzuleiten sind,
- wie groß die Einheiten sind, in welchen die zu transferierenden Daten anzufordern bzw. einzulesen sind,
- wie groß die Einheiten sind, in welchen die zu transferierenden Daten weiterzuleiten sind,
- ob die erhaltenen Daten zwischenzuspeichern sind, und gegebenenfalls
   - wo innerhalb des Zwischenspeichers IM die zwischenzuspeichernden Daten zwischenzuspeichern sind,
   - und wie groß der Zwischenspeicherplatz ist, der verwendet werden darf,
- wie viele Daten von der ersten Einrichtung anzufordern bzw. einzulesen und zwischenzuspeichern sind, bevor sie weitergeleitet werden,
- ob für die zweite Einrichtung bestimmte Daten nicht oder nur zum Teil an die zweite Einrichtung weitergeleitet werden sollen, und gegebenenfalls
   - unter welchen Umständen für die zweite Einrichtung bestimmte Daten nicht oder nur zum Teil an die zweite Einrichtung weitergeleitet werden sollen, und
   - welche Daten oder Daten-Teile nicht an die zweite Einrichtung weitergeleitet werden sollen,
- ob für die zweite Einrichtung bestimmte Daten vor deren Weiterleitung an die zweite Einrichtung zu verändern sind, und gegebenenfalls
   - unter welchen Umständen für die zweite Einrichtung bestimmte Daten vor deren Weiterleitung an die zweite Einrichtung zu verändern sind,
   - welche der für die zweite Einrichtung bestimmten Daten vor deren Weiterleitung an die zweite Einrichtung zu verändern sind, und
   - wie, beispielsweise unter Anwendung welcher arithmetischer und/oder logischer Operationen die zu verändernden Daten zu verändern sind,
- ob anstelle von für die zweite Einrichtung bestimmten Daten andere Daten an die zweite Einrichtung weiterzuleiten sind, und gegebenenfalls
   - unter welchen Umständen anstelle der für die zweite Einrichtung bestimmten Daten andere Daten an die zweite Einrichtung weiterzuleiten sind,
   - anstelle welcher Daten andere Daten weiterzuleiten sind, und
   - welche Daten anstelle der für die zweite Einrichtung bestimmten Daten weiterzuleiten sind,
- ob für die zweite Einrichtung bestimmte Daten statt an die zweite Einrichtung oder zusätzlich an eine andere Einrichtung weiterzuleiten sind, und gegebenenfalls.
   - unter welchen Umständen für die zweite Einrichtung bestimmte Daten statt an die zweite Einrichtung oder zusätzlich an eine andere Einrichtung weiterzuleiten sind,
   - an welche andere Einrichtung die für die zweite Einrichtung bestimmten Daten weiterzuleiten sind, und
   - welche Daten statt an die zweite Einrichtung oder zusätzlich an eine andere Einrichtung weiterzuleiten sind,
- ob das Entgegennehmen und/oder das Holen von Daten von der ersten Einrichtung und/oder das Weiterleiten der Daten an die zweite Einrichtung zu beenden ist, wenn bestimmte Daten oder eine bestimmte Datenfolge auftreten, und gegebenenfalls
   - beim Auftreten welcher Daten oder welcher Datenfolge das Entgegennehmen und/oder das Holen von Daten von der ersten Einrichtung und/oder das Weiterleiten der Daten an die zweite Einrichtung zu beenden ist,

Es dürfte einleuchten und bedarf keiner näheren Erläuterung, daß die Festlegungen, die durch die Konfigurationsdaten getroffen werden, auch mehr, weniger, und/oder andere Festlegungen umfassen können.

Der Zwischenspeicher IM ist im betrachteten Beispiel ein FIFO-Speicher, kann prinzipiell aber auch ein beliebig anders organisierter Speicher sein.

Die Arbitrierungslogik AL ist mit Eingangsanschlüssen TR1 bis TR32 der Datenübertragungseinrichtung DTU verbunden, über welche der Datenübertragungseinrichtung signalisiert wird, daß ein bestimmter DMA-Transfer ausgeführt werden soll, und entscheidet, in welcher Reihenfolge die angeforderten DMA-Transfers ausgeführt werden.

Die Interrupt-Erzeugungseinrichtung IGU erzeugt bei Bedarf ein Interrupt-Request-Signal, durch welches bestimmte Umstände wie insbesondere die erfolgte Durchführung eines angeforderten DMA Transfers, oder ein aufgetretener Fehler signalisiert wird.

Wie vorstehend bereits erwähnt wurde, kann die Datenübertragungseinrichtung DTU wahlweise, abwechselnd oder gleichzeitig als DMA-Controller und/oder als Bus Bridge verwendet werden.

Im folgenden wird zunächst die Verwendung der Datenübertragungseinrichtung DTU als DMA-Controller beschrieben.

Wenn eine der Komponenten des Mikrocontrollers einen DMA-Transfer veranlassen möchte, signalisiert sie dies der Datenübertragungseinrichtung DTU durch Übertragung eines einen bestimmten Pegel aufweisenden, im folgenden als Transfer-Request-Signal bezeichneten Signals an einen der Eingangsanschlüsse TR1 bis TR32 der Datenübertragungseinrichtung DTU.

Das Transfer-Request-Signal gelangt von dem Eingangsanschluß, dem es zugeführt wird, in die Arbitrierungslogik AL, welche anhand von in ihr gespeicherten und von außerhalb der Datenübertragungseinrichtung DTU veränderbaren Informationen die Priorität des angeforderten Transfer-Requests ermittelt, und basierend darauf festlegt, welcher der bereits angeforderten, aber noch nicht ausgeführten DMA-Transfers als nächster auszuführen ist. Der Transfer-Request, dem die höchste Priorität zugeordnet ist, genauer gesagt eine Transfer-Request-Nummer, die angibt, über welchen der Eingangsanschlüsse TR1 bis TR32 der betreffende Transfer-Request angefordert wurde, wird an die zentrale Steuereinheit CCU weitergeleitet. Die zentrale Steuereinheit CCU liest den dieser Tranfer-Request-Nummer zugeordneten Konfigurationsdatensatz aus dem Konfigurationsdatenspeicher CDM aus und konfiguriert unter Verwendung dieser Daten die zu konfigurierenden Datenübertragungseinrichtungs-Komponenten.

Danach kann mit der Ausführung des angeforderten DMA-Requests begonnen werden. Hierzu fordert die Datenübertragungseinrichtung DTU zunächst die Zuteilung des Busses bzw. der Busse an, den bzw. die sie zur Durchführung des DMA-Requests benötigt. Nachdem der Datenübertragungseinrichtung DTU der benötigte Bus bzw. die benötigten Busse zugeteilt wurden, führt sie den auszuführenden DMA-Request auf die durch die vorhergehenden Konfiguration vorgegebene Art und Weise aus.

Es könnte auch vorgesehen werden, daß die Datenübertragungseinrichtung DTU zunächst nur die zu transferierenden Daten anfordert, einliest, und zwischenspeichert, mit der Weiterleitung aber erst beginnt, wenn ihr von außerhalb signalisiert wird, daß sie dies tun soll.

Wenn für mehrere DMA-Transfers verschiedene Busse (und damit auch verschiedene Bus-Interfaces BIx) benötigt werden, können diese mehreren DMA-Transfers auch gleichzeitig ausgeführt werden.

Insbesondere wenn eine größere Anzahl von angeforderten, aber noch nicht ausgeführten DMA-Transfers vorliegt, kann es sich als vorteilhaft erweisen, wenn die Ausführung der DMA-Transfers zumindest vorübergehend nicht streng nach der Reihenfolge der ihnen zugeordneten Prioritäten erfolgt, sondern unter alleiniger oder zusätzlicher Berücksichtigung des Kriteriums, daß jeweils eine möglichst große Anzahl von DMA-Transfers gleichzeitig ausgeführt wird.

Wie aus den vorstehenden Erläuterungen ersichtlich ist, lassen sich durch eine einzige Datenübertragungseinrichtung der vorstehend beschriebenen Art zwischen beliebigen, insbesondere auch zwischen an verschiedenen Bussen angeschlossenen Komponenten des Mikrocontrollers DMA-Transfers ausführen.

Wollte man dies unter Verwendung herkömmlicher DMA-Controller erreichen, müßten im betrachteten Beispiel insgesamt 4 DMA-Controller (1 DMA-Controller pro Bus) vorgesehen werden, und zudem die mehreren Busse über Bus Bridges oder dergleichen verbunden werden, wozu im Fall, daß jeder Bus mit jedem anderen Bus über eine Bus Bridge verbunden werden soll, insgesamt 6 Bus Bridges vorgesehen werden müßten.

Die beschriebene Datenübertragungseinrichtung erweist sich folglich auch dann als vorteilhaft, wenn sie "nur" zur Durchführung von DMA-Transfers ausgelegt ist oder verwendet wird.

Der Vollständigkeit halber sei angemerkt, daß das Transfer-Request-Signal und/oder die für den DMA-Transfer zu verwendenden Konfigurationsdaten auch in entsprechende Funktionsregister der Datenübertragungseinrichtung DTU geschrieben werden könnten.

Wenn die Datenübertragungseinrichtung DTU zusätzlich als Bus Bridge verwendet werden soll, führt sie die im folgenden beschriebenen Aktionen aus. Es sei bereits an dieser Stelle darauf hingewiesen, daß die Datenübertragungseinrichtung auch ausschließlich als Bus Bridge verwendet werden kann; in diesem Fall können die Eingangsanschlüsse TR1 bis TR32 sowie die Arbitrierungslogik AL entfallen.

Wenn die Datenübertragungseinrichtung DTU als Bus Bridge verwendet wird,
- überprüft die Datenübertragungseinrichtung DTU unter Auswertung der über die Busse BUS1 bis BUS4 übertragenen Daten fortlaufend, ob eine Einrichtung, die an einem der Busse BUS1 bis BUS4 angeschlossen ist, gerade Daten zu einer Einrichtung übertragen möchte, die an einem anderen Bus angeschlossen ist, und
- führt dann, wenn dies der Fall ist, den Transfer der zu übertragenden Daten vom einen Bus auf den anderen Bus durch.

Die Überprüfung, ob eine Einrichtung, die an einem der Busse BUS1 bis BUS4 angeschlossen ist, gerade Daten zu einer Einrichtung übertragen möchte, die an einem anderen Bus angeschlossen ist, erfolgt durch die zentrale Steuereinheit CCU. Diese erhält von den Bus-Interfaces BI1 bis BI4 die über die Busse BUS1 bis BUS4 transferierten Daten und kann dadurch feststellen, ob eine Einrichtung, die an einem der Busse BUS1 bis BUS4 angeschlossen ist, gerade Daten zu einer Einrichtung übertragen möchte, die an einem anderen Bus angeschlossen ist.

Die Überprüfung erfolgt dadurch, daß überprüft wird, ob die Adresse der Einrichtung, zu der Daten übertragen werden sollen, die Adresse einer Einrichtung ist, die nicht am selben Bus angeschlossen ist wie die die Daten ausgebende Einrichtung. In der Datenübertragungseinrichtung DTU sind zu diesem Zweck die Adressen der Einrichtungen gespeichert, die den an die jeweiligen Busse angeschlossenen Einrichtungen zugeordnet sind. Diese Adressen können von außerhalb der Datenübertragungseinrichtung DTU, genauer gesagt durch die CPU oder eine sonstige Komponente des Mikrocontrollers in die Datenübertragungseinrichtung DTU geschrieben oder wunschgemäß verändert werden.

Wenn die Datenübertragungseinrichtung DTU feststellt, daß die die Daten ausgebende Einrichtung und die Einrichtung, für welche diese Daten bestimmt sind, an verschiedenen Bussen angeschlossen sind, ermittelt sie, an welchen Bussen die betreffenden Einrichtungen angeschlossen sind, und konfiguriert die mit diesen Bussen verbundenen Bus-Interfaces BIx und/oder die diesen zugeordneten Zwischenspeicher-Steuereinrichtungen IMCx derart, daß die zu transferierenden Daten ordnungsgemäß vom einen Bus auf den anderen Bus weitergeleitet werden.

Die Daten, unter Verwendung welcher die Bus-Interfaces BIx und/oder die diesen zugeordneten Zwischenspeicher-Steuereinrichtungen IMCx konfiguriert werden, werden unter Berücksichtigung der Einrichtungen oder der Busse, zwischen welchen Daten transferiert werden sollen, aus dem Konfigurationsdatenspeicher CDM ausgelesen, oder durch die zentrale Steuereinheit CCU selbst erzeugt.

Nachdem die Bus-Interfaces BIx und/oder die diesen zugeordneten Zwischenspeicher-Steuereinrichtungen IMCx konfiguriert sind, werden die von der die Daten ausgebenden Einrichtung stammenden Daten von einem der Bus-Interfaces entgegengenommen, und sofort oder später (nach einer Zwischenspeicherung im Zwischenspeicher IM) durch das andere Bus-Interface an die Einrichtung, für welche die Daten bestimmt sind, weitergeleitet; bevor die Daten weitergeleitet werden, muß das die Daten weiterleitende Bus-Interface den diesem zugeordneten Bus anfordern und zugeteilt bekommen.

Wenn gleichzeitig an verschiedenen Bussen angeschlossene Einrichtungen Daten an Einrichtungen übertragen wollen, die an verschiedenen anderen Bussen angeschlossen sind, kann die Datenübertragungseinrichtung DTU den Transfer der Daten vom jeweils einen Bus auf den jeweils anderen Bus auch gleichzeitig durchführen. Dadurch ist es beispielsweise möglich, daß die Datenübertragungseinrichtung
- Daten von einem ersten Bus auf einen zweiten Bus transferiert, und gleichzeitig Daten von einem dritten Bus auf einen vierten Bus transferiert, oder
- Daten von einem ersten Bus auf einen zweiten Bus transferiert, und gleichzeitig auf den ersten Bus zu transferierende Daten von einem dritten Bus einliest und zwischenspeichert, oder
- zuvor vom dritten Bus eingelesene und zwischengespeicherte Daten auf den ersten Bus ausgibt, und gleichzeitig Daten von einem dritten Bus auf einen vierten Bus transferiert.

Wie aus den vorstehenden Erläuterungen lassen sich durch eine einzige Datenübertragungseinrichtung der vorstehend beschriebene Art mehrere Bus Bridges ersetzen; würde man die vier Busse BUS1 bis BUS4, mit welchen die in der Figur 4 gezeigte Datenübertragungseinrichtung verbunden ist, über herkömmliche Bus Bridges miteinander verbinden, müßten sechs herkömmlich Bus Bridges vorgesehen werden.

Die beschriebene Datenübertragungseinrichtung kann auch gleichzeitig als Bus Bridge und als DMA-Controller aktiv sein. Dadurch ist es beispielsweise möglich, daß die Datenübertragungseinrichtung als Bus Bridge zwischen einem ersten Bus und einem zweiten Bus wirkt (Daten zwischen diesen Bussen transferiert), und gleichzeitig einen DMA-Transfer zwischen zwei an einem dritten Bus angeschlossenen Einrichtungen ausführt.

Daß durch die beschriebene Datenübertragungseinrichtung gleichzeitig oder abwechselnd Daten zwischen am selben Bus angeschlossenen Komponenten des Mikrocontrollers und Daten zwischen an verschiedenen Bussen angeschlossenen Komponenten des Mikrocontrollers transferiert werden können, ermöglicht es auf äußerst einfache Weise, die miteinander zu verbindenden Komponenten des Mikrocontrollers ohne Inkaufnahme von Nachteilen auf mehrere Busse zu verteilen.

Aufgrund der Vielzahl von Möglichkeiten zur Anpassung der Datenübertragungseinrichtung an die Besonderheiten der an sie angeschlossenen Busse können die Busse völlig unabhängig voneinander betrieben werden. Insbesondere können sie verschiedene Datenübertragungsraten aufweisen, und unter Verwendung verschiedener Datenübertragungs-Protokolle arbeiten.

Die Verbindung der miteinander zu verbindenden Komponenten des Mikrocontrollers über mehrere Busse ermöglicht es,
- daß die Datenmenge, die über jeden einzelnen Bus transferiert werden muß, geringer ist als es der Fall wäre, wenn die Komponenten des Mikrocontrollers nur über einen einzigen Bus miteinander verbunden wären, so daß die Zeit (die Latenzzeit), die eine den Bus benötigende Komponente warten muß, bis sie den Bus verwenden kann, geringer wird, und
- daß die Busse jeweils relativ kurz sein können, so daß sie mit einer höheren Datenübertragungsrate arbeiten können als es der Fall wäre, wenn die Komponenten des Mikrocontrollers nur über einen einzigen Bus miteinander verbunden wären.

Dabei kann auch vorgesehen werden, daß die Datenübertragungseinrichtung an einem oder mehreren Bussen die einzige Einheit ist, die an dem betreffenden Bus oder an den betreffenden Bussen Bus-Master sein kann.

Die beschriebene Datenübertragungseinrichtung erweist sich nach alledem in verschiedenster Hinsicht als vorteilhaft.

## Patentansprüche

1. Datenübertragungseinrichtung, durch welche Daten, die von einer ersten Einrichtung erhalten wurden und für eine zweite Einrichtung bestimmt sind, an die zweite Einrichtung weitergeleitet werden, und welche Anschlüsse zum Anschluß von mindestens zwei Datenbussen aufweist,
**dadurch gekennzeichnet,**
**daß** die Datenübertragungseinrichtung so ausgebildet ist, daß sie über einen ersten Datenbus erhaltene Daten sofort oder später wahlweise auf den selben Datenbus, oder einen anderen Datenbus ausgeben kann.

2. Datenübertragungseinrichtung nach Anspruch 1,
**dadurch gekennzeichnet,**
**daß** die Datenübertragungseinrichtung so betreibbar ist, daß für die zweite Einrichtung bestimmte Daten nicht oder nur zum Teil an die zweite Einrichtung weitergeleitet werden.

3. Datenübertragungseinrichtung nach Anspruch 1,
**dadurch gekennzeichnet,**
**daß** die Datenübertragungseinrichtung so betreibbar ist, daß für die zweite Einrichtung bestimmte Daten vor deren Weiterleitung an die zweite Einrichtung verändert werden.

4. Datenübertragungseinrichtung nach Anspruch 1,
**dadurch gekennzeichnet,**
**daß** die Datenübertragungseinrichtung so betreibbar ist, daß anstelle der für die zweite Einrichtung bestimmten Daten andere Daten an die zweite Einrichtung ausgegeben werden.

5. Datenübertragungseinrichtung nach Anspruch 1,
**dadurch gekennzeichnet,**
**daß** die Datenübertragungseinrichtung so betreibbar ist, daß für die zweite Einrichtung bestimmte Daten statt an die zweite Einrichtung oder zusätzlich an eine andere Einrichtung weitergeleitet werden.

6. Datenübertragungseinrichtung nach Anspruch 1,
**dadurch gekennzeichnet,**
**daß** die Datenübertragungseinrichtung so betreibbar ist, daß das Entgegennehmen und/oder das Holen von Daten von der ersten Einrichtung und/oder das Weiterleiten der Daten an die zweite Einrichtung beendet wird, wenn in den erhaltenen oder den weiterzuleitenden Daten bestimmte Daten oder eine bestimmte Datenfolge enthalten sind.

7. Datenübertragungseinrichtung nach Anspruch 1,
**dadurch gekennzeichnet,**
**daß** die Datenübertragungseinrichtung so betreibbar ist, daß die Größe der Einheiten, in welchen die Datenübertragungseinrichtung Daten von der ersten Einrichtung entgegennimmt oder holt, und die Größe der Einheiten, in welchen die Datenübertragungseinrichtung die Daten an die zweite Einrichtung weiterleitet, unabhängig voneinander festlegbar sind.

8. Datenübertragungseinrichtung nach Anspruch 1,
**dadurch gekennzeichnet,**
**daß** die Datenübertragungseinrichtung dazu ausgelegt ist, von der ersten Einrichtung auf eine entsprechende Anforderung seitens der Datenübertragungseinrichtung ausgegebene Daten, und von der ersten Einrichtung auf eigene Veranlassung ausgegebene Daten an die an die zweite Einrichtung weiterzuleiten.

9. Datenübertragungseinrichtung nach Anspruch 2,
**dadurch gekennzeichnet,**
**daß** einstellbar ist, ob für die zweite Einrichtung bestimmte Daten nicht oder nur zum Teil an die zweite Einrichtung weitergeleitet werden sollen.

10. Datenübertragungseinrichtung nach Anspruch 2,
**dadurch gekennzeichnet,**
**daß** einstellbar ist, unter welchen Umständen für die zweite Einrichtung bestimmte Daten nicht oder nur zum Teil an die zweite Einrichtung weitergeleitet werden sollen.

11. Datenübertragungseinrichtung nach Anspruch 2,
**dadurch gekennzeichnet,**
**daß** einstellbar ist, welche Daten oder Daten-Teile nicht an die zweite Einrichtung weitergeleitet werden sollen.

12. Datenübertragungseinrichtung nach Anspruch 3,
**dadurch gekennzeichnet,**
**daß** die Veränderung dadurch erfolgt, daß die zu verändernden Daten bestimmten logischen und/oder arithmetischen Operationen unterzogen werden.

13. Datenübertragungseinrichtung nach Anspruch 3,
**dadurch gekennzeichnet,**
**daß** einstellbar ist, ob Daten zu verändern sind.

14. Datenübertragungseinrichtung nach Anspruch 3,
**dadurch gekennzeichnet,**
**daß** einstellbar ist, unter welchen Umständen Daten zu verändern sind.

15. Datenübertragungseinrichtung nach Anspruch 3,
**dadurch gekennzeichnet,**
**daß** einstellbar ist, welche Daten zu verändern sind.

16. Datenübertragungseinrichtung nach Anspruch 3,
**dadurch gekennzeichnet,**
**daß** einstellbar ist, wie die zu verändernden Daten zu verändern sind.

17. Datenübertragungseinrichtung nach Anspruch 4,
**dadurch gekennzeichnet,**
**daß** einstellbar ist, ob anstelle der für die zweite Einrichtung bestimmten Daten andere Daten an die zweite Einrichtung weiterzuleiten sind.

18. Datenübertragungseinrichtung nach Anspruch 4,
**dadurch gekennzeichnet,**
**daß** einstellbar ist, unter welchen Umständen anstelle der für die zweite Einrichtung bestimmten Daten andere Daten an die zweite Einrichtung weiterzuleiten sind.

19. Datenübertragungseinrichtung nach Anspruch 4,
**dadurch gekennzeichnet,**
**daß** einstellbar ist, anstelle welcher Daten andere Daten weiterzuleiten sind.

20. Datenübertragungseinrichtung nach Anspruch 4,
**dadurch gekennzeichnet,**
**daß** einstellbar ist, welche Daten anstelle der für die zweite Einrichtung bestimmten Daten weiterzuleiten sind.

21. Datenübertragungseinrichtung nach Anspruch 5,
**dadurch gekennzeichnet,**
**daß** einstellbar ist, ob für die zweite Einrichtung bestimmte Daten statt an die zweite Einrichtung oder zusätzlich an eine andere Einrichtung weiterzuleiten sind.

22. Datenübertragungseinrichtung nach Anspruch 5,
**dadurch gekennzeichnet,**
**daß** einstellbar ist, unter welchen Umständen für die zweite Einrichtung bestimmte Daten statt an die zweite Einrichtung oder zusätzlich an eine andere Einrichtung weiterzuleiten sind.

23. Datenübertragungseinrichtung nach Anspruch 5,
**dadurch gekennzeichnet,**
**daß** einstellbar ist, an welche andere Einrichtung die für die zweite Einrichtung bestimmten Daten weiterzuleiten sind.

24. Datenübertragungseinrichtung nach Anspruch 5,
**dadurch gekennzeichnet,**
**daß** einstellbar ist, welche Daten statt an die zweite Einrichtung oder zusätzlich an eine andere Einrichtung weiterzuleiten sind.

25. Datenübertragungseinrichtung nach Anspruch 6,
**dadurch gekennzeichnet,**
**daß** einstellbar ist, ob das Entgegennehmen und/oder das Holen von Daten von der ersten Einrichtung und/oder das Weiterleiten der Daten an die zweite Einrichtung zu beenden ist, wenn in den erhaltenen oder den weiterzuleitenden Daten bestimmte Daten oder eine bestimmte Datenfolge enthalten sind.

26. Datenübertragungseinrichtung nach Anspruch 6,
**dadurch gekennzeichnet,**
**daß** einstellbar ist, beim Auftreten welcher Daten oder welcher Datenfolge das Entgegennehmen und/oder das Holen von Daten von der ersten Einrichtung und/oder das Weiterleiten der Daten an die zweite Einrichtung zu beenden ist.

27. Datenübertragungseinrichtung nach Anspruch 7,
**dadurch gekennzeichnet,**
**daß** einstellbar ist, wie groß die Einheiten sind, in welchen die Datenübertragungseinrichtung Daten von der ersten Einrichtung entgegennimmt oder holt, und/oder wie groß die Einheiten sind, in welchen die Datenübertragungseinrichtung die Daten an die zweite Einrichtung weiterleitet.

28. Datenübertragungseinrichtung nach Anspruch 8,
**dadurch gekennzeichnet,**
**daß** einstellbar ist, ob die an die zweite Einrichtung weiterzuleitenden Daten durch die Datenübertragungseinrichtung von der ersten Einrichtung anzufordernde Daten, oder von der ersten Einrichtung auf eigene Veranlassung ausgegebene Daten sind.

29. Datenübertragungseinrichtung nach einem der vorhergehenden Ansprüche,
**dadurch gekennzeichnet,**
**daß** die Datenübertragungseinrichtung so ausgebildet ist, daß sie als DMA-Controller verwendbar ist.

30. Datenübertragungseinrichtung nach einem der vorhergehenden Ansprüche,
**dadurch gekennzeichnet,**
**daß** die Datenübertragungseinrichtung so ausgebildet ist, daß sie als Bus Bridge verwendbar ist.

31. Datenübertragungseinrichtung nach einem der vorhergehenden Ansprüche,
**dadurch gekennzeichnet,**
**daß** die Datenübertragungseinrichtung so ausgebildet ist, daß sie wahlweise als Bus Bridge oder als DMA-Controller verwendbar ist.

32. Datenübertragungseinrichtung nach einem der vorhergehenden Ansprüche,
**dadurch gekennzeichnet,**
**daß** die Datenübertragungseinrichtung so ausgebildet ist, daß sie abwechselnd als Bus Bridge oder als DMA-Controller verwendbar ist.

33. Datenübertragungseinrichtung nach einem der vorhergehenden Ansprüche,
**dadurch gekennzeichnet,**
**daß** die Datenübertragungseinrichtung so ausgebildet ist, daß sie gleichzeitig als Bus Bridge oder als DMA-Controller verwendbar ist.

34. Datenübertragungseinrichtung nach einem der vorhergehenden Ansprüche,
**dadurch gekennzeichnet,**
**daß** die Datenübertragungseinrichtung so ausgebildet ist, daß sie während des Entgegennehmens von Daten von der ersten Einrichtung und/oder des Weiterleitens von Daten an die zweite Einrichtung gleichzeitig Daten von einer dritten Einrichtung entgegennehmen kann und/oder Daten an eine vierte Einrichtung weiterleiten kann.

35. Datenübertragungseinrichtung nach einem der vorhergehenden Ansprüche,
**dadurch gekennzeichnet,**
**daß** die Datenübertragungseinrichtung einen Zwischenspeicher aufweist, in welchem die von der ersten Einrichtung erhaltenen Daten und/oder die an die zweite Einrichtung weiterzuleitende Daten zwischengespeichert werden können.

36. Datenübertragungseinrichtung nach einem der vorhergehenden Ansprüche,
**dadurch gekennzeichnet,**
**daß** die Datenübertragungseinrichtung so ausgebildet ist, daß sie mit der Weiterleitung von erhaltenen Daten erst beginnt, nachdem von außerhalb der Datenübertragungseinrichtung signalisiert wurde, daß sie dies tun soll.

37. Datenübertragungseinrichtung nach einem der vorhergehenden Ansprüche,
**dadurch gekennzeichnet,**
**daß** die Datenübertragungseinrichtung einen Konfigurationsdatenspeicher enthält, in welchem mehrere Sätze von Konfigurationsdaten zur Einstellung der einstellbaren Parameter gespeichert sind.

38. Datenübertragungseinrichtung nach Anspruch 37,
**dadurch gekennzeichnet,**
**daß** die Datenübertragungseinrichtung den jeweils zu verwendenden Konfigurationsdatensatz abhängig vom jeweils durchzuführenden Datentransfer auswählt.

39. Datenübertragungseinrichtung nach Anspruch 37,
**dadurch gekennzeichnet,**
**daß** der Konfigurationsdatenspeicher von außerhalb der Datenübertragungseinrichtung beschreibbar ist.

## Claims

1. Data transmission device which forwards data which have been received from a first device and are intended for a second device to the second device, and which has connections for connecting at least two data buses,
**characterized in that**
the data transmission device is in a form such that it can output data received via a first data bus either onto the same data bus or onto another data bus immediately or later.

2. Data transmission device according to Claim 1,
**characterized in that**
the data transmission device can be operated such that data intended for the second device are not or are only partially forwarded to the second device.

3. Data transmission device according to Claim 1,
**characterized in that**
the data transmission device can be operated such that data intended for the second device are changed before they are forwarded to the second device.

4. Data transmission device according to Claim 1,
**characterized in that**
the data transmission device can be operated such that, instead of the data intended for the second device, other data are output to the second device.

5. Data transmission device according to Claim 1,
**characterized in that**
the data transmission device can be operated such that data intended for the second device are forwarded to another device instead of to the second device or additionally.

6. Data transmission device according to Claim 1,
**characterized in that**
the data transmission device can be operated such that the reception and/or the fetching of data from the first device and/or the forwarding of the data to the second device is/are ended if the data received or the data to be forwarded contain particular data or a particular data sequence.

7. Data transmission device according to Claim 1,
**characterized in that**
the data transmission device can be operated such that the size of the units in which the data transmission device receives or fetches data from the first device and the size of the units in which the data transmission device forwards the data to the second device can be stipulated independently of one another.

8. Data transmission device according to Claim 1,
**characterized in that**
the data transmission device is designed to forward to the second device data which have been output by the first device following an appropriate request from the data transmission device and data which have been output by the first device under its own influence.

9. Data transmission device according to Claim 2,
**characterized in that**
it is possible to set whether data intended for the second device will not be forwarded to the second device or will be forwarded only partially.

10. Data transmission device according to Claim 2,
**characterized in that**
it is possible to set the circumstances under which data intended for the second device will not be forwarded to the second device or will be forwarded only partially.

11. Data transmission device according to Claim 2,
**characterized in that**
it is possible to set which data or data sections will not be forwarded to the second device.

12. Data transmission device according to Claim 3,
**characterized in that**
the change is made by virtue of the data to be changed being subjected to particular logic and/or arithmetic operations.

13. Data transmission device according to Claim 3,
**characterized in that**
it is possible to set whether data need to be changed.

14. Data transmission device according to Claim 3,
**characterized in that**
it is possible to set the circumstances under which data need to be changed.

15. Data transmission device according to Claim 3,
**characterized in that**
it is possible to set which data need to be changed.

16. Data transmission device according to Claim 3,
**characterized in that**
it is possible to set how the data to be changed need to be changed.

17. Data transmission device according to Claim 4,
**characterized in that**
it is possible to set whether, instead of the data intended for the second device, other data need to be forwarded to the second device.

18. Data transmission device according to Claim 4,
**characterized in that**
it is possible to set the circumstances under which, instead of the data intended for the second device, other data need to be forwarded to the second device.

19. Data transmission device according to Claim 4,
**characterized in that**
it is possible to set the data in whose stead other data need to be forwarded.

20. Data transmission device according to Claim 4,
**characterized in that**
it is possible to set which data need to be forwarded instead of the data intended for the second device.

21. Data transmission device according to Claim 5,
**characterized in that**
it is possible to set whether data intended for the second device need to be forwarded to another device instead of to the second device or additionally.

22. Data transmission device according to Claim 5,
**characterized in that**
it possible to set the circumstances under which data intended for the second device need to be forwarded to another device instead of to the second device or additionally.

23. Data transmission device according to Claim 5,
**characterized in that**
it is possible to set the other device to which the data intended for the second device need to be forwarded.

24. Data transmission device according to Claim 5,
**characterized in that**
it is possible to set which data need to be forwarded to another device instead of to the second device or additionally.

25. Data transmission device according to Claim 6,
**characterized in that**
it is possible to set whether the reception and/or the fetching of data from the first device and/or the forwarding of the data to the second device needs/need to be ended if the data received or the data to be forwarded contain particular data or a particular data sequence.

26. Data transmission device according to Claim 6,
**characterized in that**
it is possible to set upon the occurrence of which data or which data sequence there is a need to receive and/or fetch data from the first device and/or to forward the data to the second device.

27. Data transmission device according to Claim 7,
**characterized in that**
it is possible to set the size of the units in which the data transmission device receives or fetches data from the first device and/or the size of the units in which the data transmission device forwards the data to the second device.

28. Data transmission device according to Claim 8,
**characterized in that**
it is possible to set whether the data to be forwarded to the second device are data which the data transmission device needs to request from the first device or are data which are output by the first device under its own influence.

29. Data transmission device according to one of the preceding claims,
**characterized in that**
the data transmission device is in a form such that it can be used as a DMA controller.

30. Data transmission device according to one of the preceding claims,
**characterized in that**
the data transmission device is in a form such that it can be used as a bus bridge.

31. Data transmission device according to one of the preceding claims,
**characterized in that**
the data transmission device is in a form such that it can be used either as a bus bridge or as a DMA controller.

32. Data transmission device according to one of the preceding claims,
**characterized in that**
the data transmission device is in a form such that it can be used alternately as a bus bridge or as a DMA controller.

33. Data transmission device according to one of the preceding claims,
**characterized in that**
the data transmission device is in a form such that it can be used simultaneously as a bus bridge or as a DMA controller.

34. Data transmission device according to one of the preceding claims,
**characterized in that**
the data transmission device is in a form such that, during the reception of data from the first device and/or the forwarding of data to the second device, it can simultaneously receive data from a third device and/or forward data to a fourth device.

35. Data transmission device according to one of the preceding claims,
**characterized in that**
the data transmission device has a buffer store which can buffer-store the data received from the first device and/or the data to be forwarded to the second device.

36. Data transmission device according to one of the preceding claims,
**characterized in that**
the data transmission device is in a form such that it does not start to forward received data until signaling from outside the data transmission device has indicated that it may do so.

37. Data transmission device according to one of the preceding claims,
**characterized in that**
the data transmission device contains a configuration data store storing a plurality of sets of configuration data for setting the settable parameters.

38. Data transmission device according to Claim 37,
**characterized in that**
the data transmission device selects the respective configuration data set to be used on the basis of the respective data transfer to be made.

39. Data transmission device according to Claim 37,
**characterized in that**
the configuration data store can have information written to it from outside the data transmission device.

## Revendications

1. Dispositif de transmission de données transmettant à un deuxième dispositif des données reçues en provenance d'un premier dispositif et destinées au deuxième dispositif, et doté de connexions servant à connecter au moins deux bus de données,
**caractérisé en ce que**
le dispositif de transmission de données se présente sous une forme telle qu'il peut émettre des données reçues via un premier bus de données soit sur le même bus de données, soit sur un autre bus de données, immédiatement ou plus tard.

2. Dispositif de transmission de données selon la revendication 1,
**caractérisé en ce que**
le dispositif de transmission de données peut être exploité de telle sorte que les données destinées au deuxième dispositif ne soient pas, ou soient seulement partiellement, transmises au deuxième dispositif.

3. Dispositif de transmission de données selon la revendication 1,
**caractérisé en ce que**
le dispositif de transmission de données peut être exploité de telle sorte que les données destinées au deuxième dispositif soient modifiées avant d'être transmises au deuxième dispositif.

4. Dispositif de transmission de données selon la revendication 1,
**caractérisé en ce que**
le dispositif de transmission de données peut être exploité de telle sorte qu'au lieu des données destinées au deuxième dispositif, d'autres données soient émises vers le deuxième dispositif.

5. Dispositif de transmission de données selon la revendication 1,
**caractérisé en ce que**
le dispositif de transmission de données peut être exploité de telle sorte que les données destinées au deuxième dispositif soient transmises à un autre dispositif, au lieu ou en plus du deuxième dispositif.

6. Dispositif de transmission de données selon la revendication 1,
**caractérisé en ce que**
le dispositif de transmission de données peut être exploité de telle sorte qu'il soit mis fin à la réception et / ou à la récupération de données à partir du premier dispositif et /ou à la transmission des données au deuxième dispositif si les données reçues ou les données à transmettre contiennent des données particulières ou une séquence de données particulière.

7. Dispositif de transmission de données selon la revendication 1,
**caractérisé en ce que**
le dispositif de transmission de données peut être exploité de telle sorte que la taille des unités dans lesquelles le dispositif de transmission de données reçoit ou récupère des données à partir du premier dispositif et la taille des unités dans lesquelles le dispositif de transmission de données transmet les données au deuxième dispositif peuvent être spécifiées indépendamment l'une de l'autre.

8. Dispositif de transmission de données selon la revendication 1,
**caractérisé en ce que**
le dispositif de transmission de données est conçu pour transmettre au deuxième dispositif des données qui ont été émises par le premier dispositif suite à une demande appropriée émanant du dispositif de transmission de données et des données qui ont été émises par le premier dispositif sous sa propre influence.

9. Dispositif de transmission de données selon la revendication 2,
**caractérisé en ce que**
l'on peut spécifier si les données destinées au deuxième dispositif ne seront pas transmises au deuxième dispositif ou ne lui seront transmises que partiellement.

10. Dispositif de transmission de données selon la revendication 2,
**caractérisé en ce que**
l'on peut spécifier les circonstances dans lesquelles les données destinées au deuxième dispositif ne seront pas transmises au deuxième dispositif ou ne lui seront transmises que partiellement.

11. Dispositif de transmission de données selon la revendication 2,
**caractérisé en ce que**
l'on peut spécifier quelles données ou sections de données ne seront pas transmises au deuxième dispositif.

12. Dispositif de transmission de données selon la revendication 3,
**caractérisé en ce que**
la modification est effectuée du fait que les données à modifier sont soumises à des opérations logiques et / ou arithmétiques particulières.

13. Dispositif de transmission de données selon la revendication 3,
**caractérisé en ce que**
l'on peut spécifier si des données doivent être modifiées.

14. Dispositif de transmission de données selon la revendication 3,
**caractérisé en ce que**
l'on peut spécifier les circonstances dans lesquelles des données doivent être modifiées.

15. Dispositif de transmission de données selon la revendication 3,
**caractérisé en ce que**
l'on peut spécifier quelles données doivent être modifiées.

16. Dispositif de transmission de données selon la revendication 3,
**caractérisé en ce que**
l'on peut spécifier la manière dont les données à modifier doivent être modifiées.

17. Dispositif de transmission de données selon la revendication 4,
**caractérisé en ce que**
l'on peut spécifier si, au lieu des données destinées au deuxième dispositif, d'autres données doivent être transmises au deuxième dispositif.

18. Dispositif de transmission de données selon la revendication 4,
**caractérisé en ce que**
l'on peut spécifier les circonstances dans lesquelles, au lieu des données destinées au deuxième dispositif, d'autres données doivent être transmises au deuxième dispositif.

19. Dispositif de transmission de données selon la revendication 4,
**caractérisé en ce que**
l'on peut spécifier les données à la place desquelles d'autres données doivent être transmises.

20. Dispositif de transmission de données selon la revendication 4,
**caractérisé en ce que**
l'on peut spécifier quelles données doivent être transmises au lieu des données destinées au deuxième dispositif.

21. Dispositif de transmission de données selon la revendication 5,
**caractérisé en ce que**
l'on peut spécifier si les données destinées au deuxième dispositif doivent être transmises à un autre dispositif au lieu ou en plus du deuxième dispositif.

22. Dispositif de transmission de données selon la revendication 5,
**caractérisé en ce que**
l'on peut spécifier les circonstances dans lesquelles les données destinées au deuxième dispositif doivent être transmises à un autre dispositif au lieu ou en plus du deuxième dispositif.

23. Dispositif de transmission de données selon la revendication 5,
**caractérisé en ce que**
l'on peut spécifier l'autre dispositif auquel les données destinées au deuxième dispositif doivent être transmises.

24. Dispositif de transmission de données selon la revendication 5,
**caractérisé en ce que**
l'on peut spécifier quelles données doivent être transmises à un autre dispositif au lieu ou en plus du deuxième dispositif.

25. Dispositif de transmission de données selon la revendication 6,
**caractérisé en ce que**
l'on peut spécifier s'il doit être mis fin à la réception et / ou à la récupération de données à partir du premier dispositif et / ou à la transmission des données au deuxième dispositif si les données reçues ou les données à transmettre contiennent des données particulières ou une séquence de données particulière.

26. Dispositif de transmission de données selon la revendication 6,
**caractérisé en ce que**
l'on peut spécifier à l'apparition de quelles données ou de quelle séquence de données il est nécessaire de recevoir et /ou de récupérer des données à partir du premier dispositif et / ou de transmettre les données au deuxième dispositif.

27. Dispositif de transmission de données selon la revendication 7,
**caractérisé en ce que**
l'on peut spécifier la taille des unités dans lesquelles le dispositif de transmission de données reçoit ou récupère des données à partir du premier dispositif et / ou la taille des unités dans lesquelles le dispositif de transmission de données transmet les données au deuxième dispositif.

28. Dispositif de transmission de données selon la revendication 8,
**caractérisé en ce que**
l'on peut spécifier si les données à transmettre au deuxième dispositif sont des données que le dispositif de transmission de données doit demander au premier dispositif ou sont des données émises par le premier dispositif sous sa propre influence.

29. Dispositif de transmission de données selon l'une des revendications précédentes,
**caractérisé en ce que**
le dispositif de transmission de données se présente sous une forme telle qu'il peut être utilisé comme contrôleur DMA.

30. Dispositif de transmission de données selon l'une des revendications précédentes,
**caractérisé en ce que**
le dispositif de transmission de données se présente sous une forme telle qu'il peut être utilisé comme pontage de bus.

31. Dispositif de transmission de données selon l'une des revendications précédentes,
**caractérisé en ce que**
le dispositif de transmission de données se présente sous une forme telle qu'il peut être utilisé soit comme pontage de bus, soit comme contrôleur DMA.

32. Dispositif de transmission de données selon l'une des revendications précédentes,
**caractérisé en ce que**
le dispositif de transmission de données se présente sous une forme telle qu'il peut être utilisé alternativement comme pontage de bus ou comme contrôleur DMA.

33. Dispositif de transmission de données selon l'une des revendications précédentes,
**caractérisé en ce que**
le dispositif de transmission de données se présente sous une forme telle qu'il peut être utilisé simultanément comme pontage de bus et comme contrôleur DMA.

34. Dispositif de transmission de données selon l'une des revendications précédentes,
**caractérisé en ce que**
le dispositif de transmission de données se présente sous une forme telle que, pendant la réception de données provenant du premier dispositif et / ou la transmission de données au deuxième dispositif, il peut simultanément recevoir des données provenant d'un troisième dispositif et / ou transmettre des données à un quatrième dispositif.

35. Dispositif de transmission de données selon l'une des revendications précédentes,
**caractérisé en ce que**
le dispositif de transmission de données est doté d'une mémoire-tampon capable de mettre en tampon les données reçues en provenance du premier dispositif et / ou les données à transmettre au deuxième dispositif.

36. Dispositif de transmission de données selon l'une des revendications précédentes,
**caractérisé en ce que**
le dispositif de transmission de données se présente sous une forme telle qu'il ne commence à transmettre des données reçues qu'après qu'une signalisation provenant de l'extérieur du dispositif de transmission de données a indiqué qu'il pouvait le faire.

37. Dispositif de transmission de données selon l'une des revendications précédentes,
**caractérisé en ce que**
le dispositif de transmission de données contient une mémoire de données de configuration mémorisant une pluralité de jeux de données de configuration destinées à régler les paramètres réglables.

38. Dispositif de transmission de données selon la revendication 37,
**caractérisé en ce que**
le dispositif de transmission de données choisit le jeu respectif de données de configuration à utiliser sur la base du transfert de données respectif à effectuer.

39. Dispositif de transmission de données selon la revendication 37,
**caractérisé en ce que**
la mémoire de données de configuration peut faire l'objet d'une écriture d'informations depuis l'extérieur du dispositif de transmission de données.
